# EUROPEAN PATENT APPLICATION

(11) **EP 0 996 016 A2**
(43) Date of publication of application: **26.04.2000**
(21) Application number: 99308351.8
(22) Date of filing: 22.10.1999
(51) Int. Cl.: G02B 6/44

(54) **Optical fibre cable**

(30) Priority: 23.10.1998 GB 9823185; 29.10.1998 GB 9823699; 24.02.1999 GB 9904174
(71) Applicant: BOWTHORPE PLC, Crawley, West Sussex RH10 2NZ (GB)
(72) Inventor: Foss, Raymond Charles, Plymounth, PL3 4NX (GB)
(74) Representative: Evans, Huw David Duncan

(57) **Abstract**

An optical fibre cable comprises a core 10 formed with a plurality of longitudinally-extending grooves 12, equally spaced-apart around its circumference, one or more tubes 14 located within each said groove, each tube containing a plurality of optical fibres 16 and a tubular sheath 18 disposed around the core 10.

## Description

The present invention relates to an optical fibre cable.

A number of different types of optical fibre cable are known. One such cable comprises a core member having a tensile member provided along its axis, and formed with typically 6 or 8 V-section slots spaced-apart around its circumference: a number of optical fibres are contained within each slot and enclosed by a tubular sheath applied around the core. In another optical fibre cable, a number of tubes, each containing a number of loose optical fibres, are stranded around a cylindrical core member, which has an axial tensile member: again, the cable is completed by a tubular sheath. These two forms of optical fibre cable have good tensile strength and can include a large number of fibres (typically up to 48 fibres in the slotted-core cable, and up to 144 in the loose-tube cable) : however, both cables are of relatively large diameter.

A further known type of optical fibre cable comprises a core member formed with five or ten longitudinally-extending slots, each slot accommodating a number of ribbons each consisting of a number of fibres disposed side-by-side. However, such ribbon cables are difficult to manage in cable splice organisers, partly because of the fixed orientations of the ribbons.

A yet further known type of cable, the micro-sheath or micro-bundle cable, comprises a bundle of tubes each containing a number of optical fibres, the bundle of fibre-containing tubes being enclosed within an outer, tubular sheath which incorporates tensile strength members. This cable is of relatively small diameter and can contain larger numbers of fibres than the slotted-core and loose-tube cables: however, it is of limited tensile strength and also offers limited resistance to being crushed.

We have now devised an optical fibre cable which is of relatively small diameter yet has good tensile strength and resistance to crushing, compared to known optical fibre cables having equivalent numbers of optical fibres.

In accordance with the present invention, there is provided an optical fibre cable which comprises a core formed with a plurality of longitudinally-extending grooves, equally spaced-apart around its circumference, one or more tubes located within each said groove, each tube containing a plurality of optical fibres, and a tubular sheath disposed around the core.

The core itself may be arranged to provide the required tensile strength for the cable. For this purpose, the core may be made, for example, of aluminium or aluminium alloy, or of g.r.p. (glass reinforced plastics material), or of a polyimide or aromatic polyamide (such as Kevlar). Instead, the core may be provided with one or more tensile members: for example, the core may be provided with a single tensile member extending longitudinally along its axis; instead, or in addition, the core may be provided with tensile members positioned adjacent its outer surface (either embedded in the core or located in grooves formed in its outer surface), each of these tensile members being mid-way between a respective pair of the fibre-containing grooves. The tensile members may be formed of metal, preferably steel, or of g.r.p., or of a polyimide or aromatic polyamide (such as Kevlar) for example. Because the tensile members are provided in the core, rather than in the sheath, it is easier to strip the sheath and gain access to the optical fibres. The core itself may be extruded from plastics material, preferably high density polyethylene.

Preferably the core is formed with three or six fibre-containing grooves, but may instead be formed with four such grooves.

The arrangement of the core, with three, four or six fibre-containing grooves, provides the structure with inherent resistance to crushing. Each fibre-containing groove is preferably part-circular or arcuate in cross-section: the grooves may be re-entrant at the surface of the core, such that portions of the core along the opposite sides of each groove partially close the groove to help retain the fibre-containing tubes; instead, the grooves may be non-re-entrant or fully open at the surface of the core, to allow a group or cluster of fibre-containing tubes to be inserted during manufacture.

Preferably the fibre-containing grooves follow paths, along the length of the core, of alternating helical form, the grooves thus extending partly around the core in one rotary direction, then reversing to extend partly around the core in the opposite rotary direction, and so on.

Where each groove of the cable core contains a cluster of two or more fibre-containing tubes, this cluster of tubes may be enclosed in its own sheath, or may be held together by a tape or other filament wound e.g. spirally around them. Instead, the tubes may be held together by means of an adhesive, preferably an adhesive which allows them to be peeled apart when desired. The enclosing sheaths or the binding tapes or the adhesive of the clusters of fibre-containing tubes may be colour-coded: the individual fibre-containing tubes may also be colour-coded and the individual fibres within each tube may also be colour coded. The arrangement provides a particularly effective coding scheme, in which relatively few colours are needed (corresponding to the maximum number of fibres, typically 12, in each tube).

Each groove of the core may be filled with gel, grease or other composition to prevent moisture or gas migrating along the cable should the outer sheath of the cable be punctured or split. Each fibre-containing tube may also be filled with such a composition as in present loose tube cables.

Preferably a moisture barrier is provided around the core. Preferably this comprises a strip of metal foil/plastics laminate applied longitudinally of the core and wrapped around the core so that its opposite longitudinal edges overlap.

The fibre-containing tubes (and the individual sheaths, where provided, of each cluster of tubes) are preferably formed of plastics material by extrusion, preferably PVC or polyethylene. These extrusions are typically very thin-walled, such that they may be split and removed easily, even using the fingers only.

Material may be applied around the core which has the property that it swells upon absorbing water, to form a block against the migration of moisture along the cable. This material my be impregnated into a tape (e.g. a cloth tape wrapped around the core).

Embodiments of the present invention will now be described by way of examples only and with reference to the accompanying drawings, in which:
FIGURE 1 is a cross-section through a first embodiment of optical fibre cable in accordance with the present invention;
FIGURES 2 and 3 are cross-sections through modifications of the cable shown in Figure 1;
FIGURE 4 is a cross-section through a second embodiment of optical fibre cable in accordance with the present invention;
FIGURES 5 and 6 are cross-sections through modifications of the cable shown in Figure 4;
FIGURE 7 is a cross-section through a third embodiment of optical fibre cable in accordance with the present invention;
FIGURE 8 is a cross-section through a modification of the cable shown in Figure 7;
FIGURE 9 is a cross-section through a fourth embodiment of cable in accordance with the present invention;
FIGURE 10 is an enlarged cross-section through the core of the cable of Figure 9;
FIGURE 11 is a view of an end portion of a cable in accordance with the present invention, shown with its tensile members fixed to an anchor point; and
FIGURE 12 is a view of an end portion of a cable in accordance with the present invention, showing the use of one of its tensile members to strip the sheath from the core of the cable.

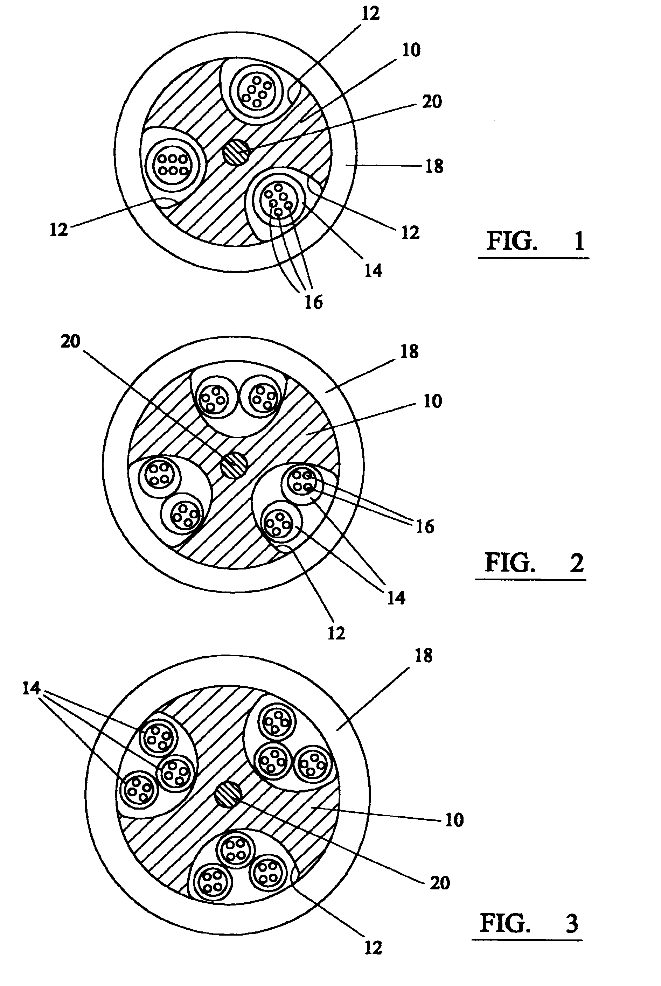

Referring to Figure 1 of the drawings, there is shown an optical fibre cable which comprises an extruded core 10 of plastics material, preferably high density polyethylene, which is generally circular in cross-section and formed with three grooves 12, spaced at 120° intervals. Each groove 12 is generally part-circular or arcuate in cross-section. Each groove 12 contains a single tube 14 which encloses a plurality of optical fibres 16. The cable further comprises an outer, tubular sheath 18 of plastics material, which fits directly around the core 10 and closes the grooves 12. The cable also includes a tensile member 20 extending longitudinally along its axis. The tensile member 20 may comprise a metal wire (e.g. of steel) whether solid or stranded, or a cord formed of g.r.p. (glass reinforced plastics) fibres or a solid filament of a polyimide or aromatic polyamide (such as Kevlar).

Figures 2 and 3 show cables which are the same as the cable of Figure 1, and of the same outside diameters (typically 7mm), except that the grooves 12 are somewhat larger in order to contain two fibre-containing tubes 14 each (Figure 2) or three fibre-containing tubes 14 each (Figure 3).

Typically, the tubes 14 of the cables shown in Figures 1, 2 and 3 may each contain 4,6, 8 or 12 fibres. The cables may therefore include a maximum of 36 fibres (Figure 1), 72 fibres (Figure 2) or 108 fibres (Figure 3).

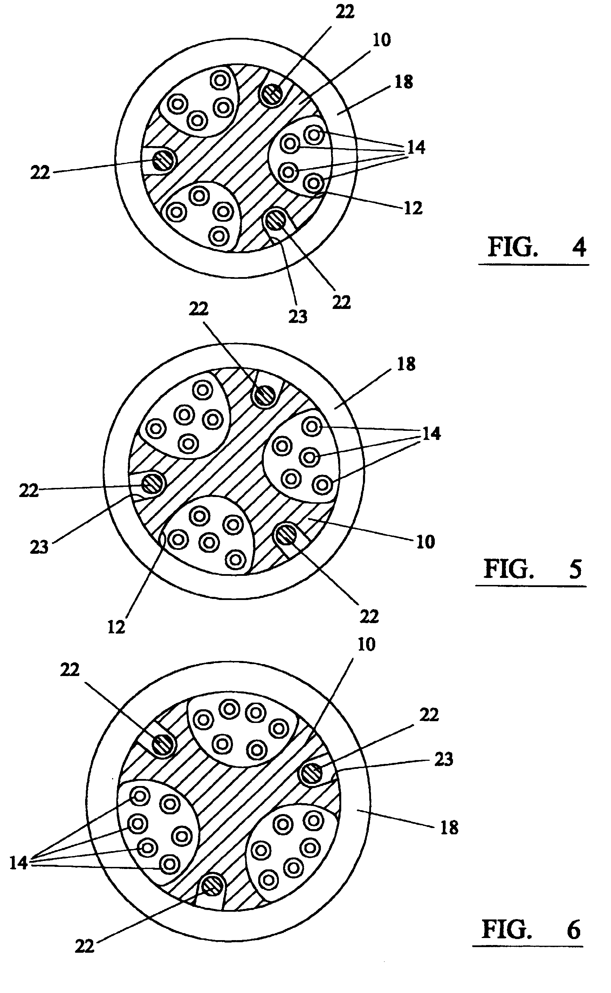

Figure 4 shows a cable of larger diameter than the cables of Figure 1, such that the grooves 12 are able to contain four fibre-containing tubes 14. Instead of a single, axial tensile member, the cable of Figure 4 has three tensile members 22 positioned within grooves 23 in the outer surface of the core, each groove 23 being mid-way between a respective pair of the grooves 12. Preferably the tensile members 22 are free to move radially within their grooves 23, to render the cable easier to bend.

Figures 5 and 6 show cables which are the same as the cable shown in Figure 4, and of the same outside diameters (typically 13mm), except that the grooves 12 are somewhat larger in order to accommodate five fibre-containing tubes 14 each (Figure 5) or six fibre-containing grooves each (Figure 6).

Typically, the tubes 14 of the cables shown in Figures 4, 5 and 6 may each contain 4,6, 8 or 12 fibres. The cables may therefore include a maximum of 144 fibres (Figure 4), 180 fibres (Figure 5) or 216 fibres (Figure 6).

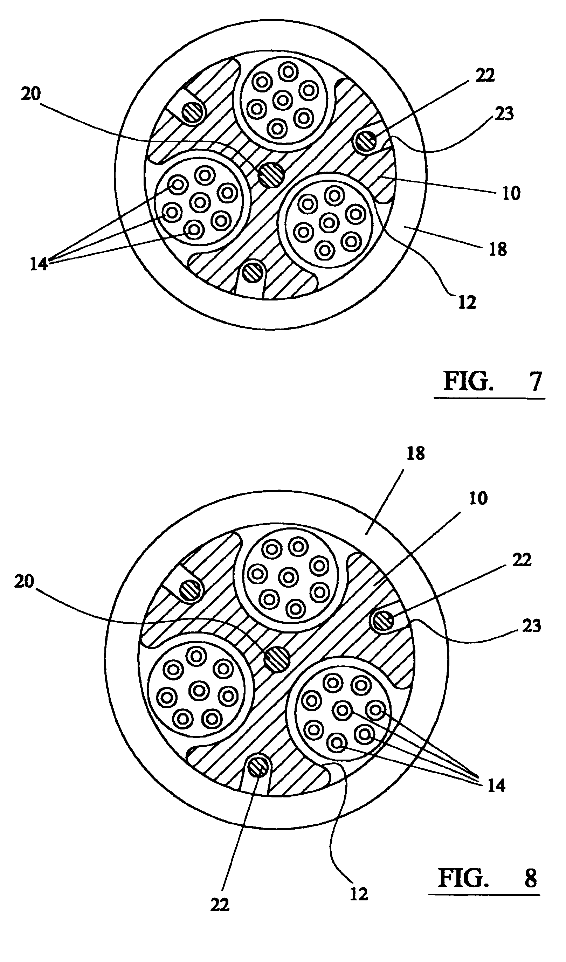

Figure 7 shows a cable of larger diameter again than the cables of Figures 4,5 and 6, such that the grooves 12 are able to contain seven fibre-containing tubes 14. The cable has one tensile member 20 extending along the axis of the core, and also three tensile members 22 disposed in grooves 23 in the surface of the core, each groove 23 being mid-way between the main grooves 12. Figure 8 shows a cable which is the same as the cable of Figure 7, and of the same diameter (typically 16mm), except that the grooves 12 are arranged to accommodate eight fibre-containing tubes 14.

Typically, the tubes 14 of the cables shown in Figures 7 and 8 may each contain 4, 6, 8 or 12 fibres. The cables may therefore include a maximum of 252 fibres (Figure 7) or 288 fibres (Figure 8).

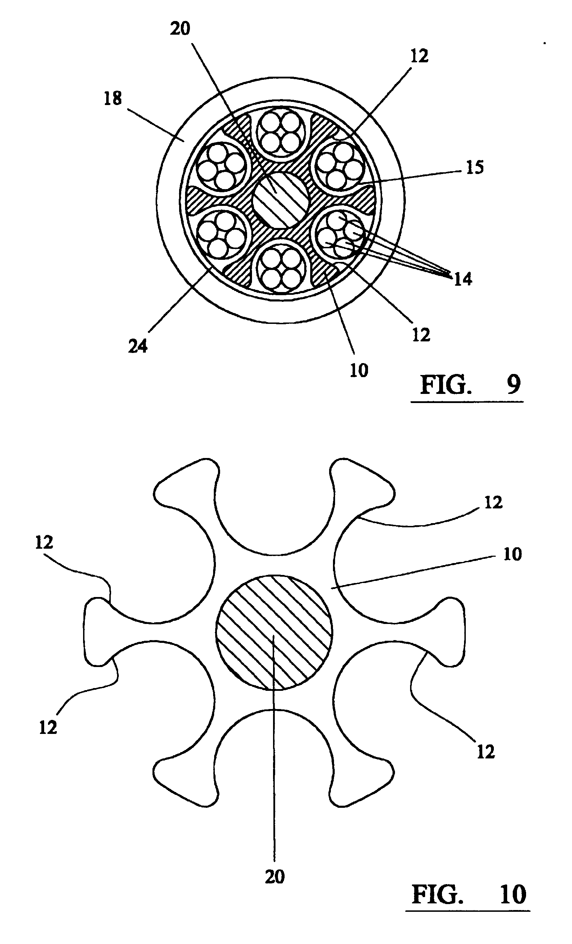

Figures 9 and 10 show a further embodiment of cable in accordance with the present invention, comprising an extruded core 10 of plastics material, preferably high density polyethylene, which is generally circular in cross-section and formed with six grooves 12, equally spaced at 60° intervals around its circumference. Each groove 12 contains a cluster of four fibre-containing tubes 14, which are enclosed within a sheath 15. Each groove 12 is generally U-shaped in section and is accordingly fully-open: this allows the clusters of four fibre-containing tubes 14 to be laid in the respective grooves 12 of the pre-extruded core 10. The core 10 includes a tensile member 20 extending along its axis, preferably comprising a stranded steel member typically 2.5mm in diameter, or a g.r.p. or Kevlar member typically of 3.5mm.

The cluster-containing grooves 12 follow paths, along the length of the core 10, of alternating helical form, the grooves 12 thus extending partly around the core (typically through 90°) in one rotary direction, then reversing to extend around the core (again typically through 90°) in the opposite rotary direction, and so on: thus, typically there is an angular displacement of 180° over one pitch, the length of which (longitudinally of the cable) may be in the range of 150 to 3000mm. The arrangement provides for easy access to the fibres once the cable sheath is cut away.

A moisture barrier 24 is provided around the core 10, comprising a strip of aluminium/plastics foil laminate extending longitudinally of the cable and wrapped around the core 10 so that its longitudinal edges overlap, and are then bonded together. Finally, an outer sheath 18 of plastics material is extruded over the foil-wrapped core.

Because of the provision of six grooves 12 in the core 10 of the cable shown in Figure 9, the fibre-containing tubes 14 can be distributed better around the circumference of the core, the grooves 12 being accordingly of lesser depth (for accommodating the same number of fibre-containing tubes) and so allowing space for an axial tensile member 20 of greater diameter and therefore greater strength.

In each of the above-described cables, the grooves 12 are preferably filled with a gel, grease or other composition so that, should the outer sheath and moisture barrier become split, neither moisture nor gas is able to migrate along the cable. The sheath 15 of each cluster of fibre-containing tubes 14 (Figure 9) may also be filled with such a composition: the fibre-containing tubes 14 of all embodiments may also be filled with such a composition.

In each of the above-described embodiments, the fibre-containing tubes 14 (and the sheaths 15 of each cluster in Figure 9) are formed of plastics material by extrusion, preferably PVC or polyethylene, and are very thin-walled, such that they may be split and removed easily, even using the fingers only.

Also in each of the above-described embodiments, the core may be wrapped with a tape (e.g. applied longitudinally so that its opposite edges overlap) which is coated or impregnated with a substance having the property that it swells upon absorbing water, to form a block against the migration of moisture along the cable.

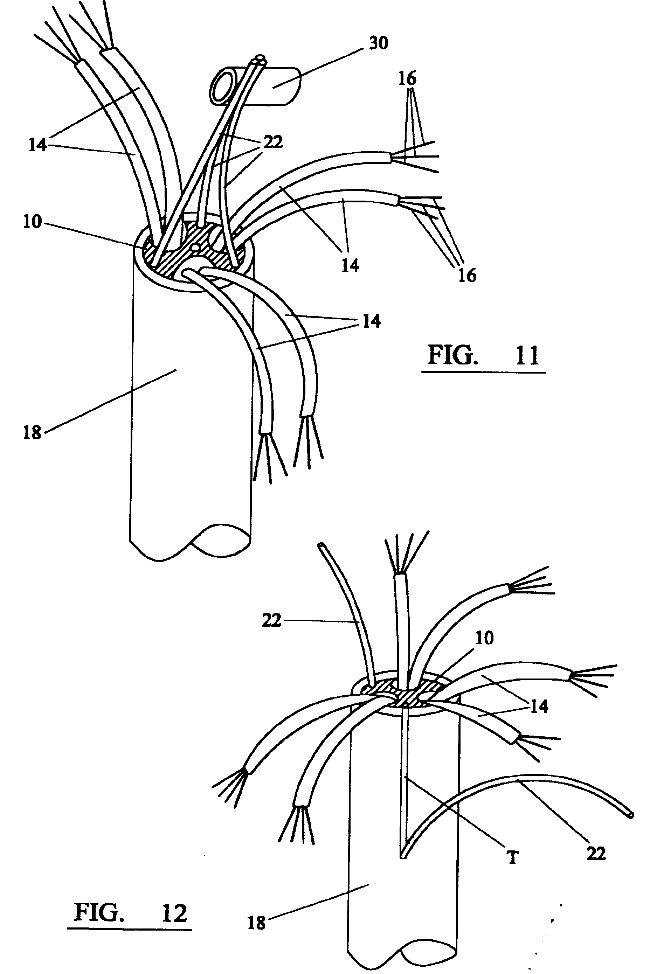

Referring to Figure 11, for a cable having tensile members 22 in respective grooves 23 at the outside surface of the core, as in the cables of Figures 4 to 8, these tensile members may be fixed to a common anchor point 30 at the end of the cable, once an end length of the outer sheath 18 and core 10 has been cut back as shown. The fibre-containing tubes 14 are however fully accessible in that they fan out through the spaces between the tensile members 22.

As shown in Figure 12, any one of the tensile members 22 may be used as a rip cord, pulling it radially outwardly and at the same time longitudinally along the cable from its end, in order to tear the outer sheath 18 along a corresponding longitudinal line T. Once the sheath 18 has been torn in this manner along a sufficiently long line, the sheath 18 can be cut circumferentially to remove the corresponding end length of sheath from the core 10. Although in the embodiments of Figures 4 to 8 the tensile members 22 are located in respective grooves 23 in the core, they may instead be embedded in the core adjacent the outer surface of the latter: each of tensile members 22 can then still be used as a rip cord as just described. Moreover, where the tensile strength of the cable is provided by the core itself (e.g. where this is made of aluminium) or by an axial tensile member 20, the members 22 may be provided to serve as rip cords but without imparting tensile strength.

Once the outer sheath 18 and core 10 have been cut back, each exposed cluster of fibre-containing tubes 14 may have a sleeve fitted over it, and the end of this sleeve may be pushed into the exposed end of the respective groove 12 in the core for retention.

In any of the above-described embodiments of cable where each groove 12 of the core contains two or more fibre-containing tubes 14, these tubes may be enclosed in a sheath 15 (as in Figure 9) or held together as a cluster by a tape wound around them. Alternatively, the tubes may be held together by a low-tack adhesive, which may be applied at intervals along their length: in this way, the tubes remain together as a cluster once the sheath 18 is stripped off the core; however, the adhesive enables the tubes to be separated as and when required and even held back together again. The fibres within each tube may likewise be held together by a low-tack adhesive, again possible applied at intervals. The use of such adhesive for the fibres and/or the fibre-containing tubes makes it easier to route the fibres and/or tubes within a fibre management enclosure, just prior to splicing.

Preferably the tape wound around each cluster of fibre containing tubes 14, or the adhesive used to hold the tubes together, or the sheath 15 enclosing the tubes 14, may be colour-coded, i.e. different colours may be used for the different grooves 12 of the core. The different fibre-containing tubes 14 of each cluster may be differently coloured: finally, to complete the colour-coding scheme, the individual fibres within each tube may be differently coloured. This colour-coding scheme is particularly effective, because only 12 different colours are required (being the maximum number of fibres per tube 14) for unique identification of all fibres (i.e. by means of the colour of the fibre, the colour of the tube in which it is contained, and the colour assigned to the groove in which its cluster of tubes is contained).

## Claims

1. An optical fibre cable which comprises a core formed with a plurality of longitudinally-extending grooves, equally spaced-apart around its circumference, one or more tubes located within each said groove, each tube containing a plurality of optical fibres, and a tubular sheath disposed around the core.

2. An optical fibre cable as claimed in claim 1, in which the core is arranged to provide the tensile strength for the cable.

3. An optical fibre cable as claimed in claim 2, in which the core is provided with one or more tensile members extending longitudinally along its axis.

4. An optical fibre cable as claimed in claims 2 or 3, in which the core is provided with tensile members positioned adjacent its outer surface.

5. An optical fibre cable as claimed in any preceding claim, in which the core is formed with three, four or six fibre-containing grooves.

6. An optical fibre cable as claimed in any preceding claim, in which each fibre-containing groove is part-circular or arcuate in cross-section.

7. An optical fibre cable as claimed in any preceding claim, in which the grooves are re-entrant at the surface of the core.

8. An optical fibre cable as claimed in any of claims 1 to 6, in which the grooves are non-re-entrant or fully open at the surface of the core.

9. An optical fibre cable as claimed in any preceding claim, in which the fibre-containing grooves follow paths, along the length of the core, of alternating helical form, the grooves thus extending partly around the core in one rotary direction, then reversing to extend partly around the core in the opposite rotary direction, and so on

10. An optical fibre cable as claimed in any preceding claim, in which each groove of the cable core contains a cluster of two or more fibre-containing tubes.

11. An optical fibre cable as claimed in claim 10, in which said cluster of tubes is enclosed in its own sheath.

12. An optical fibre cable as claimed in claim 10, in which said cluster of tubes is held together by a tape or other filament wound around them.

13. An optical fibre cable as claimed in claim 10, in which said cluster of tubes is held together by means of an adhesive.

14. An optical fibre cable as claimed in claim 13, in which said cluster of tubes is held together by means of an adhesive which allows them to be peeled apart when desired.

15. An optical fibre cable as claimed in any of claims 10 to 14, in which the enclosing sheaths or the binding tapes or the adhesive of the clusters of fibre-containing tubes are colour-coded.

16. An optical fibre cable as claimed in any preceding claim, in which the individual fibre-containing tubes are colour-coded.

17. An optical fibre cable as claimed in any preceding claim, in which the individual fibres within each tube are colour coded.

18. An optical fibre cable as claimed in any preceding claim, in which the core is filled with a composition to prevent moisture or gas migrating along the cable.

19. An optical fibre cable as claimed in any preceding claim, in which the fibre-containing tube is filled a composition to prevent moisture or gas migrating along the tube.

20. An optical fibre cable as claimed in any preceding claim, in which a moisture barrier is provided around the core.

21. An optical fibre cable as claimed in claim 20, in which the moisture barrier comprises a strip of metal foil/plastics laminate applied longitudinally of the core and wrapped around the core so that its opposite longitudinal edges overlap.

22. An optical fibre cable as claimed in any preceding claim, in which the fibre-containing tubes are formed of plastics material by extrusion.

23. An optical fibre cable as claimed in any preceding claim, in which the fibre-containing tubes are very thin-walled, such that they may be split and removed easily.

24. An optical fibre cable as claimed in any preceding claim, in which material is applied around the core which has the property that it swells upon absorbing water, to form a block against the migration of moisture along the cable.

25. An optical fibre cable as claimed in claim 24, in which said material is impregnated into a tape wrapped around the core.
